# EUROPEAN PATENT SPECIFICATION

(11) **EP 1 914 206 B1**
(45) Date of publication and mention of the grant of the patent: **07.04.2010**
(21) Application number: 07019973.2
(22) Date of filing: 11.10.2007
(51) Int. Cl.: C02F 5/00, C02F 1/467, C02F 1/46, C02F 1/461, A61L 9/00, C02F 103/18

(54) **Scale removal system**
System zur Entfernung von Kalkablagerungen
Système pour l'elimination du tartre

(30) Priority: 20.10.2006 JP 2006286098
(43) Date of publication of application: 23.04.2008
(73) Proprietor: Sanyo Electric Co., Ltd., Moriguchi-shi, Osaka (JP)
(72) Inventor: Yamamoto, Tetsuya, Ota-shi Gunma 373-0806 (JP); Koizumi, Tomohito, Ota-shi Gunma 373-0813 (JP); Rakuma, Tsuyoshi, Gunma 370-0524 (JP); Umezawa, Hiroyuki, Ota-shi Gunma 373-0806 (JP); Yamamoto, Hiroshi, Neyagawa-shi Osaka 572-0006 (JP); Kobayashi, Hiroyuki, Ora-gun Gunma 370-0533 (JP); Fukushima, Norio, Ota-shi Gunma 373-0038 (JP); Usui, Hiroaki, Ora-gun Gunma 370-0523 (JP); Arakawa, Tooru, Tatebayashi-shi Gunma 374-0066 (JP)
(74) Representative: Glawe, Delfs, Moll

(56) References cited:
- WO-A-98/31636
- JP-A- 10 005 533
- JP-A- 2001 259 690
- JP-A- 2001 269 515

## Description

### BACKGROUND OF THE INVENTION

The present invention relates to a system to remove a scale from water to be treated (hereinafter "water to be treated" will be referred to as "for-treatment water").

Heretofore, for a purpose of removal of microorganism viruses, bacteria and the like, a device is proposed in which for-treatment water is electrochemically treated to produce electrolytic water, and the water is supplied to a load to remove the bacteria and the like. For example, in an air bacteria removal device, the for-treatment water is electrochemically treated to produce the electrolytic water by electrolytic treatment means including a pair of electrodes, this electrolytic water is supplied to an element (a gas-liquid contact member) as a load to bring the water into contact with air in a bacteria removal space which is circulated through the element, whereby the bacteria are removed from the air in the bacteria removal space.

However, when the for-treatment water is electrochemically treated in this manner, a problem has occurred that scale components such as silica, magnesium and calcium included in the for-treatment water are precipitated as a scale. A large part of the precipitated scale is deposited on the electrodes, but a part of the scale might flow out of the electrolytic treatment means, and might be deposited on pipes, the load and the like. In this case, when the device is used as the air bacteria removal device, a problem occurs that wettability of the element deteriorates owing to the scale, and life of the element remarkably shortens. When the device is used in a cooling tower or the like, a problem occurs that the scale is precipitated on the surface of a condenser (a cooling section) to remarkably deteriorate a cooling capability.

To avoid such disadvantages, a device is developed in which scale collection means such as a precipitation tank and a filter are disposed between the electrolytic treatment means and the load to collect the scale which has flowed out of the electrolytic treatment means and the scale which has peeled from the electrodes by reversing polarity (e.g., see Japanese Patent Application Laid-Open No. 2001-259690).

However, in the above conventional constitution, the peeled scale might be deposited on a pipe which connects the electrolytic treatment means to the scale collection means to clog the pipe. In addition, when the scale is accumulated on the scale collection means and resultantly the means is clogged, a problem occurs that circulation of the electrolytic water is disturbed. Furthermore, to peel the scale deposited on the electrodes, the polarity needs to be reversed as described above, but a peeling operation of the scale components by this reverse of the polarity is a factor for deterioration of the electrodes. Therefore, an operation has been requested to be performed without performing the polarity reverse if possible.

Furthermore, since the electrolytic water is further condensed at a load such as the element or the condenser, a problem occurs that the scale is generated even by condensation of the electrolytic water at the load. In addition, a disadvantage is caused that the scale generated at the load is fed into the electrolytic treatment means and deposited on the electrodes to remarkably shorten the life of the electrodes.

### SUMMARY OF THE INVENTION

The present invention has been developed to solve such conventional technology problem, and an object is to provide a scale removal system capable of effectively avoiding a disadvantage that a scale is deposited on electrodes and a load.

A scale removal system of a first invention is configured to remove a scale from for-treatment water which is supplied to a load in a circulating manner, comprises at least a pair of electrodes which are submerged into the for-treatment water to electrochemically treat the for-treatment water; and scale collection means disposed on a downstream side of the electrodes, and is characterized in that the for-treatment water passed through the scale collection means is split into two flows, one flow is supplied to the load, then combined with the for-treatment water from the electrodes and returned to an inlet side of the scale collection means, and the other flow is returned to an inlet side of the electrodes.

A scale removal system of a second invention is characterized in that the first invention further comprises a channel through which the for-treatment water bypasses the scale collection means.

A scale removal system of a third invention is characterized in that the first or second invention further comprises hypochlorous acid resolving means for resolving hypochlorous acid in the for-treatment water.

According to the first invention, the scale removal system configured to remove the scale from the for-treatment water which is supplied to a load in a circulating manner comprises at least the pair of electrodes which are submerged into the for-treatment water to electrochemically treat the for-treatment water; and the scale collection means disposed on the downstream side of the electrodes. The for-treatment water passed through the scale collection means is split into two flows, one flow is supplied to the load, then combined with the for-treatment water from the electrodes and returned to the inlet side of the scale collection means, and the other flow is returned to the inlet side of the electrodes. The for-treatment water to be circulated through the electrodes and the for-treatment water to be circulated through the load are combined and passed through the scale collection means, so that the scale generated by the electrodes can be collected by the scale collection means before the scale is circulated through the load. The scale generated by condensing the for-treatment water at the load is not passed through the electrodes, and can be collected by the scale collection means.

In consequence, a disadvantage that the scale is deposited on the load can be avoided. Moreover, the scale is not easily generated at the electrodes, and a disadvantage that the scale is deposited on both of the electrodes and the load can effectively be avoided.

According to the second invention, the first invention further comprises the channel through which the for-treatment water bypasses the scale collection means. Therefore, even when the scale collection means is clogged, circulation of the for-treatment water can be secured.

According to the third invention, the first or second invention further comprises the hypochlorous acid resolving means for resolving hypochlorous acid in the for-treatment water. Therefore, the hypochlorous acid resolving means can prevent a disadvantage that a concentration of hypochlorous acid generated by the electrochemical treatment by the electrodes becomes excessively high.

### BRIEF DESCRIPTION OF THE DRAWINGS

FIG. 1 is a schematic constitution diagram of a scale collection system according to one embodiment of the present invention;
FIG. 2 is a system diagram of the scale collection system shown in FIG. 1;
FIG. 3 is a system diagram of a scale collection system according to another embodiment (a second embodiment) of the present invention;
FIG. 4 is a timing chart of an operation of the scale collection system shown in FIG. 3;
FIG. 5 is another system diagram of the scale collection system according to the second embodiment of the present invention;
FIG. 6 is a system diagram of a scale collection system according to a further embodiment (a third embodiment) of the present invention;
FIG. 7 is a timing chart of an operation of the scale collection system shown in FIG. 5;
FIG. 8 is a system diagram schematically showing a scale collection system according to a fourth embodiment of the present invention; and
FIG. 9 is a system diagram schematically showing a scale collection system according to a fifth embodiment of the present invention.

### DETAILED DESCRIPTION OF THE PREFERRED EMBODIMENT

The present invention has been developed in order to effectively remove a scale which has heretofore been deposited on electrodes and a load to shorten life of both the electrodes and the load. A purpose of effectively avoiding a disadvantage that the scale is deposited on the electrodes and the load is realized by a system which includes at least a pair of electrodes which are submerged into for-treatment water to electrochemically treat the for-treatment water, and scale collection means disposed on a downstream side of the electrodes and in which the for-treatment water passed through the scale collection means is split into flows, one flow is supplied to the load, then combined with the for-treatment water from the electrodes and returned to an inlet side of the scale collection means, and the other flow is returned to an inlet side of the electrodes. Embodiments of the present invention will hereinafter be described in detail with reference to the drawings.

### (Embodiment 1)

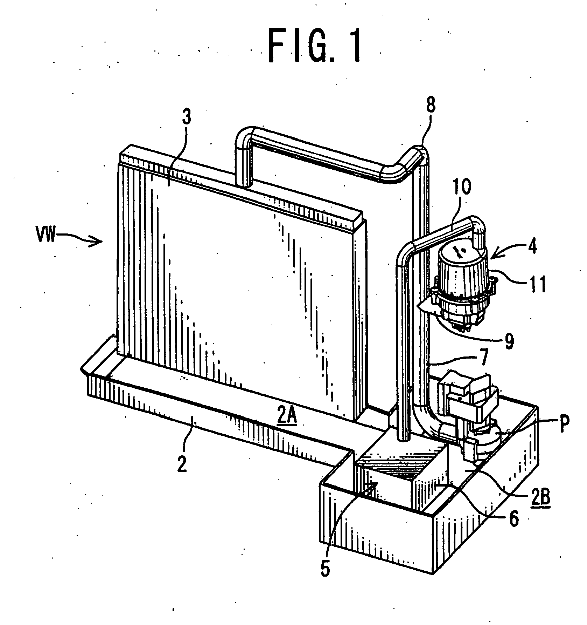

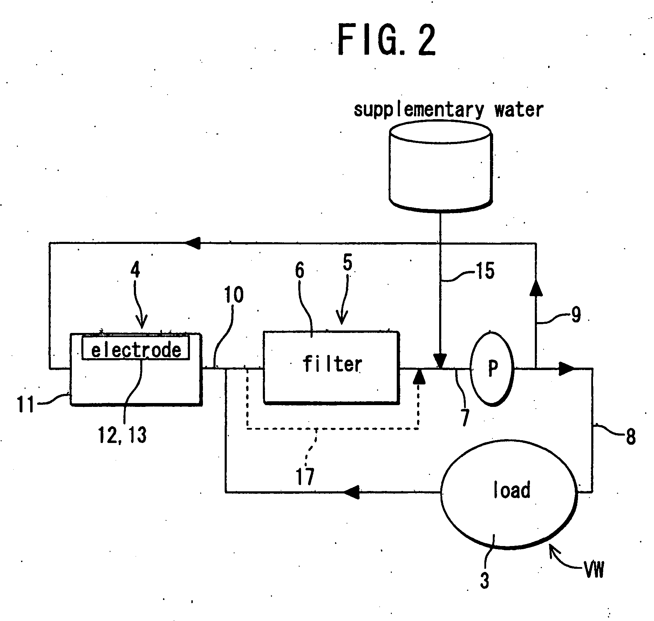

FIG. 1 shows a schematic constitution diagram of a scale collection system according to one embodiment of the present invention, and FIG. 2 shows a system diagram of the scale collection system shown in FIG. 1, respectively. In the present embodiment, the scale collection system of the present invention is applied to an air bacteria removal device VW. Therefore, a load of the present invention corresponds to an element of the air bacteria removal device VW.

The air bacteria removal device VW of the present embodiment includes a water reception tray 2 as a water storage section, an element 3 (corresponding to the load of the present invention) disposed on an upper surface of this water reception tray 2, an electrolytic cell 11, electrolytic treatment means 4 including a pair of electrodes 12, 13 (the electrodes are not shown in FIG. 1) and the like, scale collection means 5 disposed on a downstream side (an outlet side) of the electrolytic treatment means 4, and a pump P which circulates water (for-treatment water).

The element 3 is a gas-liquid contact section for bringing electrolytic water (the for-treatment water) treated by the electrolytic treatment means 4 into contact with air in a bacteria removal space, and is a filter member having a honeycomb structure. In the structure, it is assumed that a large gas-liquid contact area is secured, water can be retained, and the element is not easily clogged. That is, this element 3 is formed by bonding, for example, a bent waveform-like material and a flat-platelike material, and formed into a honeycomb shape as a whole. In these materials, there is used a material having little reactivity to the electrolytic water, that is, a material which is scarcely deteriorated by the electrolytic water, for example, a polyolefin resin based material, a PET resin based material, a vinyl chloride resin based material, a fluororesin based material, a ceramic resin based material or the like.

Moreover, a fan (not shown) is installed on the side of one surface of the element 3, and is constituted so that air in the bacteria removal space can be blown to the element 3. The water reception tray 2 is disposed under this element 3 so that the reception tray 2 can receive the for-treatment water passed through the element 3.

The scale collection means 5 is disposed in the water reception tray 2. The scale collection means 5 of the present embodiment includes a filter 6 which has such a water passing property that water (the for-treatment water) can be distributed and which is capable of trapping an only scale included in the water (in the for-treatment water). This filter 6 of the scale collection means 5 separates the inside of the water reception tray 2 into a space 2A positioned right under the element 3 and a space 2B to which one end of a pipe 7 opens. The pipe is connected to the circulation pump P for pumping up the for-treatment water from the water reception tray 2. A water surface of the for-treatment water stored in the water reception tray 2 is usually set so as to be positioned below a height dimension of the filter 6. That is, during a usual operation, all the for-treatment water allowed to drip from the element 3 into the space 2A of the water reception tray 2 passes through this filter 6 (the scale collection means 5) to enter the space 2B, and is pumped up from the pipe 7 which opens in this space 2B.

Moreover, the height dimension of the filter 6 is set to be smaller than that of a wall surface of the water reception tray 2. Therefore, when the filter 6 is clogged, that is, the for-treatment water cannot be distributed via the filter 6 owing to a scale trapped with the filter 6, a channel (a channel 17 shown by a broken line in FIG. 2) is constituted so that the for-treatment water in the space 2A bypasses the space 2B from the upside of the filter 6. That is, since the water surface of the for-treatment water stored in the water reception tray 2 is usually positioned below an upper end of the element 3 as described above, all the for-treatment water allowed to drip into the space 2A of the water reception tray 2 from the element 3 enters the space 2B via this filter 6. However, if the filter 6 is clogged, the filter 6 disturbs the distribution of the for-treatment water in the water reception tray 2, and the for-treatment water in the space 2A does not flow through the space 2B of the water reception tray 2, and is stored in the space 2A. Furthermore, when the for-treatment water stored in the space 2A is accumulated beyond the height dimension of the filter 6, the for-treatment water in the space 2A flows through an upper portion of the filter 6 into the space 2B.

Moreover, the water reception tray 2 is connected to a water supply pipe 15 for supplying water (supplementary water) from tap water or the like so that the water can be supplied into the space 2B of the water reception tray 2 on a downstream side of the filter 6 (the scale collection means 5). The water reception tray 2 is also connected to a pipe 10 from the electrolytic treatment means 4 described later so that the for-treatment water electrolytically treated by the electrolytic treatment means 4 can be supplied into the space 2A of the water reception tray 2 on an upstream side (an inlet side) of the filter 6. That is, It is constituted that the for-treatment water electrolytically treated by the electrolytic treatment means 4 is combined with the for-treatment water supplied to the element 3 in the space 2A of the water reception tray 2.

On the other hand, the pipe 7 having one end opened into the water of the space 2B of the water reception tray 2 is connected to the circulation pump P, the pipe 7 which has exited from the circulation pump P is branched into two pipes, and one pipe 8 opens at an upper end of the element 3 and is constituted so that the water can be supplied to the element. The other branched pipe 9 is connected to the electrolytic cell 11 of the electrolytic treatment means 4, and one end of the pipe 9 opens in the for-treatment water of the electrolytic cell 11.

This electrolytic treatment means 4 includes the electrolytic cell 11 and the pair of electrodes 12, 13 (an electrolytic unit), and the electrodes 12, 13 are disposed in the electrolytic cell 11 so that the electrodes can be submerged into the for-treatment water stored in the electrolytic cell 11 to energize the for-treatment water. Specifically, in the present embodiment, the electrodes 12, 13 are energized, whereby the for-treatment water in the electrolytic cell 11 is electrolyzed (electrochemically treated) to produce active oxygen species such as hypochlorous acid. Here, the active oxygen species include oxygen molecules having oxidation activity higher than that of usual oxygen, and relevant substances thereof. Additionally, they further include active oxygen substances in a so-called narrow sense, for example, super oxide anion, singlet oxygen, hydroxyl radical and hydrogen peroxide as well as active oxygen substances in a so-called broad sense, for example, ozone or hypohalogen acid.

The electrodes 12, 13 are electrode plates each including a base made of titanium (Ti) and a coat layer of iridium (Ir) or platinum (Pt). When the for-treatment water is energized by the electrodes 12, 13, the following reaction occurs in the cathode electrode:

4H⁺4e⁻+(40H⁻) → 2H₂+(4OH⁻), and

the following reaction occurs in the anode electrode:

2H₂O → 4H⁺+O₂+4e⁻.

Moreover, chloride ions (added beforehand to the for-treatment water) included in water reacts as follows:

2Cl⁻ → Cl₂+2e⁻.

Furthermore, Cl₂ reacts with water as follows:

Cl₂+H₂O → HClO+HCl.

In this constitution, when the electrodes 12, 13 are energized, hypochlorous acid (HClO) having large germicidal power is produced, and supplied to the element 3 via the filter 6, so that propagation of germs at this element 3 can be prevented. Air can be blown to the element 3 with the fan to inactivate viruses floating in the air passed through the element 3. When the air passes through the element 3, odor reacts with hypochlorous acid in the for-treatment water, and is ionized, dissolved and removed from the air, whereby the air is deodorized. It is assumed in the present embodiment that electrolysis at the electrodes 12, 13 of the electrolytic treatment means 4 is executed on predetermined conditions. As the predetermined conditions, for example, it is assumed that the electrolysis is executed for ten minutes at predetermined time intervals of, for example, 30 minutes so that a concentration of hypochlorous acid included in the for-treatment water (the electrolytic water) stored in the electrolytic cell 11 or supplied to the element 3 maintains a predetermined value (e.g., 2 PPM to 10 PPM).

Moreover, the pipe 10 is connected to the electrolytic cell 11, one end of the pipe 10 opens in the for-treatment water stored in the electrolytic cell 11, and the for-treatment water electrolyzed in the electrolytic cell 11 can be taken from the pipe 10 by an operation of the circulation pump P.

Next, an operation of the air bacteria removal device VW including the scale removal system of the present embodiment constituted as described above will be described. First, when power of the air bacteria removal device VW is turned on, the circulation pump P is driven, and simultaneously the energization of the electrodes 12, 13 of the electrolytic treatment means 4 is started. In consequence, the for-treatment water is electrolyzed in the electrolytic cell 11 to produce the electrolytic water (the for-treatment water) including hypochlorous acid (an electrochemical treatment).

Then, when the circulation pump P is operated, the for-treatment water (the electrolytic water) produced in the electrolytic cell 11 enters the pipe 10 from the one end of the pipe which opens in the for-treatment water of the electrolytic cell 11, and reaches the space 2A of the water reception tray 2 on the upstream side (the inlet side) of the filter 6. The for-treatment water of the space 2A flows into the space 2B via the filter 6, enters the pipe 7 from the one end of the pipe which opens in the space 2B, passes through the circulation pump P, and is then split into two flows, and one of the flows is supplied to the element 3 via the pipe 8.

On the other hand, simultaneously with the start of the energization of the electrodes 12, 13, the fan (not shown) disposed on the side of one surface of the element 3 is started, whereby the air in the bacteria removal space accelerated with the fan and sucked is supplied to the element 3. Then, after the air in the bacteria removal space comes in contact with hypochlorous acid included in the for-treatment water allowed to drip down to the element 3, and the air is discharged into the bacteria removal space. Hypochlorous acid has a function of destroying and eliminating (removing) virus surface protein (spike) which is indispensable for infection of influenza in a case where, for example, influenza virus invades the air ins the bacteria removal space. In a case where this protein is destroyed, the influenza virus does not bond to a receptor of an infectee, which is necessary for the infection of the virus. In consequence, the infection is inhibited. When the air in the bacteria removal space is supplied to the element 3 and brought into contact with the for-treatment water supplied to the element 3, the bacteria can be removed from the air by hypochlorous acid included in the for-treatment water.

On the other hand, the for-treatment water is condensed at the element 3, and returned into the space 2A of the water reception tray 2 on the upstream side (the inlet side) of the filter 6. In consequence, the water combines with the for-treatment water electrolyzed by the electrolytic treatment means 4 and allowed to flow into the space 2A via the pipe 10. At this time, the for-treatment water from the element 3 is condensed at the element 3 to bring the water into a state in which the scale is easily generated, and the water enters the space 2A of the water reception tray 2. Similarly, the scale generated from the for-treatment water by the electrolysis at the electrolytic treatment means 4 is deposited on the electrodes 12, 13, but a part of the scale flows out of the electrolytic cell 11 without being deposited on the electrodes 12, 13, and enters the space 2A of the water reception tray 2.

Therefore, the for-treatment water combined in this space 2A has the state in which the scale is easily generated, or a state in which the scale has been generated. Then, the for-treatment water is passed through the filter 6, whereby the scale in the for-treatment water is collected by the filter 6.

Subsequently, the for-treatment water from which the scale has been removed by the filter 6 then flows out of the water reception tray 2 via the space 2B and is split into two flows. After one of the flows is supplied to the element 3 as described above, the flow returns to the space 2A of the water reception tray 2 on the upstream side (the inlet side) of the filter 6 as described above. This cycle is repeated. The other split flow of the for-treatment water returns to the inlet side of the electrolytic treatment means 4.

The for-treatment water to be supplied to the electrolytic treatment means 4 and the for-treatment water to be supplied to the element 3 are combined and passed through the filter 6, whereby the scale generated by the electrolytic treatment means 4 can be collected by the filter 6 before the scale is supplied to the element 3. In consequence, a disadvantage that the scale is deposited on the element 3, wettability of the element 3 deteriorates and the life remarkably shortens can be avoided as much as possible.

Especially, in the present invention, the scale collection means 5 is disposed after a place where the for-treatment water from the electrolytic treatment means 4 and the for-treatment water from the element 3 are combined. Therefore, since the scale generated by condensing the for-treatment water at the element 3 is not fed to the electrolytic treatment means 4 as it is and the scale directly flows into the scale collection means 5, the scale can be collected by the filter 6 of the scale collection means 5. Therefore, the generation of the scale at the electrodes 12, 13 is also delayed, and the scale which has heretofore been generated at the electrodes is not easily generated. In consequence, since the reverse of the polarity as the factor for the deterioration of the electrodes 12, 13 can be reduced as much as possible, durability of the electrodes 12, 13 improves, and the life can be lengthened.

It is to be noted that the electrolysis at the electrodes 12, 13 of the electrolytic treatment means 4 is performed on the predetermined conditions (e.g., for ten minutes at intervals of 30 minutes so that the concentration of hypochlorous acid of the for-treatment water to be supplied into the electrolytic cell 11 or the element 3 maintains a range of 2 PPM to 10 PPM). Since the for-treatment water scale is deposited on the cathode-side electrode (one of the electrodes 12, 13) owing to such electrolysis, the polarity is reversed at a constant period. That is, when the electrolyses are performed as much as predetermined times (e.g., ten times), the polarity of the electrodes 12, 13 is reversed. Therefore, the scale deposited on the cathode-side electrode is peeled. The scale peeled from the electrodes flows into the space 2A of the water reception tray 2 together with the for-treatment water, and is collected while the scale passes through the filter 6. In this manner, even the scale peeled from the electrodes by reversing the polarity can be collected by the filter 6.

On the other hand, if a large amount of scale is deposited on the filter 6 and the water cannot be circulated through the filter 6, the for-treatment water that has flowed into the space 2A from the electrolytic treatment means 4 and the element 3 does not flow through the space 2B of the water reception tray 2, and is stored in the space 2A. Subsequently, when the for-treatment water stored in the space 2A is accumulated beyond a height dimension of the filter 6, the for-treatment water in the space 2A flows through an upper portion of the filter 6, that is, overflows to flow into the space 2B. When the for-treatment water cannot be circulated via the filter 6 in this manner, the channel 17 is constituted so that the for-treatment water in the space 2A bypasses the space 2B from the upside of the filter 6. Therefore, even if the filter 6 is clogged, the circulation of the for-treatment water can be secured until such scale with which the filter 6 is clogged is removed.

As described above in detail, according to the present invention, the disadvantage that the scale is deposited on the element 3 is avoided, the scale is not easily generated in the electrodes of the electrolytic treatment means 4, and the disadvantage that the scale is deposited on both of the electrodes and the element 3 can effectively be avoided. Furthermore, even if the filter 6 is clogged with the scale, the for-treatment water overflows the filter 6. Therefore, the circulation of the for-treatment water can be secured.

### (Embodiment 2)

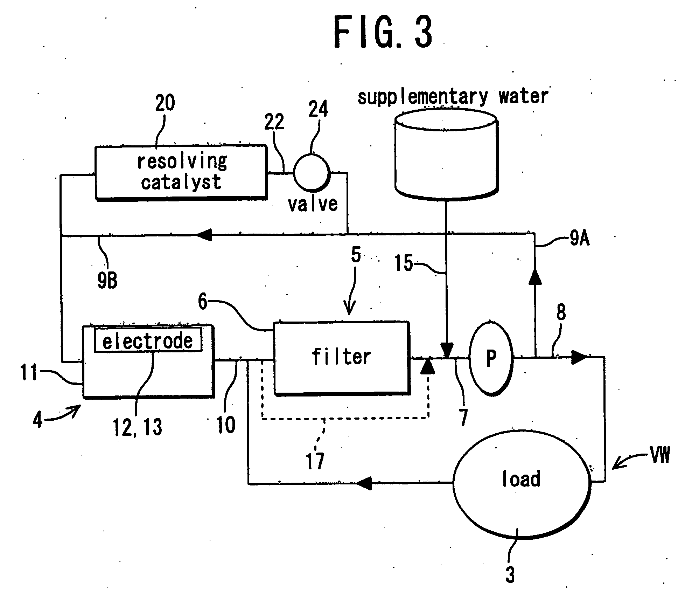

Next, a scale collection system of another embodiment (a second embodiment) will be described with reference to FIG. 3. In the embodiment, the scale collection system is applied to an air bacteria removal device VW in the same manner as in Embodiment 1. FIG. 3 is a system diagram of the scale collection system of the present embodiment. It is to be noted that in FIG. 3, components denoted with the same reference numerals as those of FIGS. 1 and 2 produce similar effects and perform functions, and hence description thereof is omitted here.

In FIG. 3, reference numeral 20 denotes a resolving catalyst as hypochlorous acid resolving means. The resolving catalyst 20 of the present embodiment includes a catalyst which resolves hypochlorous acid in the for-treatment water, and is disposed along a pipe 22. The pipe 22 is one of pipes branched from a pipe 9A, one end of the pipe branched from the pipe 9A extends via the pipe 22, and the other end of the pipe is connected to a middle portion of a pipe 9B on an upstream side (an inlet side) of electrolytic treatment means 4. On the upstream side (the inlet side)of the resolving catalyst 20 of the pipe 22, a valve device 24 (e.g., an electromagnetic valve or the like) is disposed, whereby inflow of for-treatment water into the resolving catalyst 20 on a downstream side (an outlet side) of the valve device 24 is controlled.

In the present embodiment, the valve device 24 is usually totally closed to disturb the inflow of the for-treatment water into the resolving catalyst 20 disposed on the downstream side (the outlet side) of the valve device 24. Moreover, the valve device 24 is opened for an only predetermined time immediately before energization of electrodes 12, 13 of the electrolytic treatment means 4 is started, and the for-treatment water is controlled so as to flow into the resolving catalyst 20.

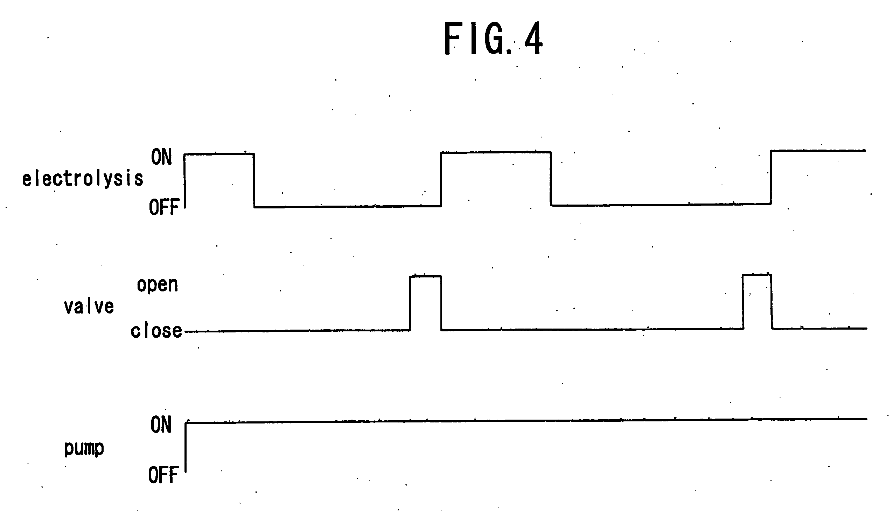

Next, an operation of the air bacteria removal device VW including a scale removal system of the present embodiment constituted as described above will be described with reference to a timing chart shown in FIG. 4. First, when power of the air bacteria removal device VW is turned on, the energization of the electrodes 12, 13 of the electrolytic treatment means 4 is started (electrolysis ON shown in FIG. 4), and a circulation pump P is simultaneously started (a state of pump ON shown in FIG. 4). At this time, the valve device 24 is closed to disturb the inflow of the for-treatment water into the resolving catalyst 20 (a state to close the valve as shown in FIG. 4). In consequence, the for-treatment water which has flowed out of the circulation pump P and has been split to flow into the pipe 9A does not flow through the resolving catalyst 20, and flows into an electrolytic cell 11 via the pipe 9B.

Subsequently, the for-treatment water is electrolyzed in the electrolytic cell 11 to produce electrolytic water (the for-treatment water) including hypochlorous acid (an electrochemical treatment). The circulation pump P is operated to allow the for-treatment water (the electrolytic water) produced in the electrolytic cell 11 to enter a pipe 10 from one end of the pipe which opens in the for-treatment water of the electrolytic cell 11, and the water reaches a space 2A of a water reception tray 2 on the upstream side (the inlet side) of a filter 6. The for-treatment water in the space 2A flows through the filter 6 into a space 2B, enters a pipe 7 from one end of the pipe which opens in this space 2B, passes through the circulation pump P, and is then split into two flows, whereby one of the flows is supplied to an element 3 via a pipe 8.

On the other hand, simultaneously with the start of the energization of the electrodes 12, 13, a fan (not shown) disposed on the side of one surface of the element 3 is started, whereby air in a bacteria removal space accelerated with the fan and sucked is supplied to the element 3. Subsequently, bacteria are removed from the air in the bacteria removal space as described in detail in the above embodiment.

On the other hand, the for-treatment water is condensed at the element 3 to return into the space 2A of the water reception tray 2 on the upstream side (the inlet side) of the filter 6. In consequence, the water combines with the for-treatment water treated by the electrolytic treatment means 4 and allowed to flow into the space 2A via the pipe 10. At this time, the for-treatment water from the element 3 is condensed at the element 3 to bring the water into a state in which a scale is easily generated, and the water enters the space 2A of the water reception tray 2. Similarly, the scale generated from the for-treatment water by the electrolysis at the electrolytic treatment means 4 is deposited on the electrodes, but a part of the scale flows out of the electrolytic cell 11 without being deposited on the electrodes, and enters the space 2A of the water reception tray 2.

Therefore, the for-treatment water combined in this space 2A has the state in which the scale is easily generated, or a state in which the scale has been generated. Then, the for-treatment water is passed through the filter 6, whereby the scale in the for-treatment water can be collected by the filter 6.

Subsequently, the for-treatment water from which the scale has been removed by the filter 6 then flows out of the water reception tray 2 via the space 2B and is split into two flows. After one of the flows is supplied to the element 3 as described above, the flow returns to the space 2A of the water reception tray 2 on the upstream side (the inlet side) of the filter 6 as described above. This cycle is repeated. The other split flow of the for-treatment water returns to the inlet side of the electrolytic treatment means 4 via the pipes 9A and 9B as described above.

On the other hand, with elapse of a predetermined time after the energization of the electrodes 12, 13 is started, the energization is stopped (electrolysis OFF shown in FIG. 4). At this time, the circulation pump P is continued to be operated (pump ON shown in FIG. 4), and the valve device 24 is closed (a state to close the valve as shown in FIG. 4).

Moreover, it is assumed that the electrolysis at the electrodes 12, 13 is performed on predetermined conditions, for example, for ten minutes at predetermined intervals of, for example, 30 minutes so that a concentration of hypochlorous acid of the for-treatment water (the electrolytic water) to be supplied into the electrolytic cell 11 or the element 3 maintains a predetermined value (e.g., 2 PPM to 10 PPM). In this case, with elapse of a predetermined time immediately before the energization of the electrodes 12, 13 is started, for example, with elapse of 25 minutes after the energization is stopped, the valve device 24 is opened for five minutes until the energization of the electrodes 12, 13 is started (valve open state shown in FIG. 4). In consequence, a part of the for-treatment water which has flowed out of the circulation pump P to be split and has flowed into the pipe 9A flows into the resolving catalyst 20 through the pipe 22. At this time, hypochlorous acid in the for-treatment water is resolved while passing through the resolving catalyst 20.

In this manner, the operation of opening the valve device 24 to pass, through the resolving catalyst 20, a part of the for-treatment water which has flowed into the pipe 9A is repeated, whereby all hypochlorous acid produced by the previous electrolysis can be resolved to initialize the concentration of hypochlorous acid before the next energization of the electrodes 12, 13 of the electrolytic treatment means 4 is started. In a case where such hypochlorous acid resolving treatment means capable of resolving hypochlorous acid in the scale removal system is not disposed, hypochlorous acid produced by the electrolytic treatment means 4, supplied to the element 3 and left without reacting with microorganism viruses, bacterial or the like at the element is gradually accumulated. Therefore, the concentration of hypochlorous acid in the for-treatment water increases, and this is not preferable from a viewpoint of durability of the air bacteria removal device VW.

However, when the hypochlorous acid resolving means (the resolving catalyst 20 in the embodiment) is disposed and operated as in the present invention, hypochlorous acid in the for-treatment water can be resolved to avoid the above-mentioned disadvantage in advance. Especially, as in the present embodiment, the energization of the electrodes 12, 13 of the electrolytic treatment means 4 is stopped to operate the resolving catalyst 20 in a state in which the electrolysis is not performed, whereby hypochlorous acid can be resolved without influencing removal of bacteria from air to avoid a disadvantage that the concentration of hypochlorous acid in the for-treatment water excessively increases.

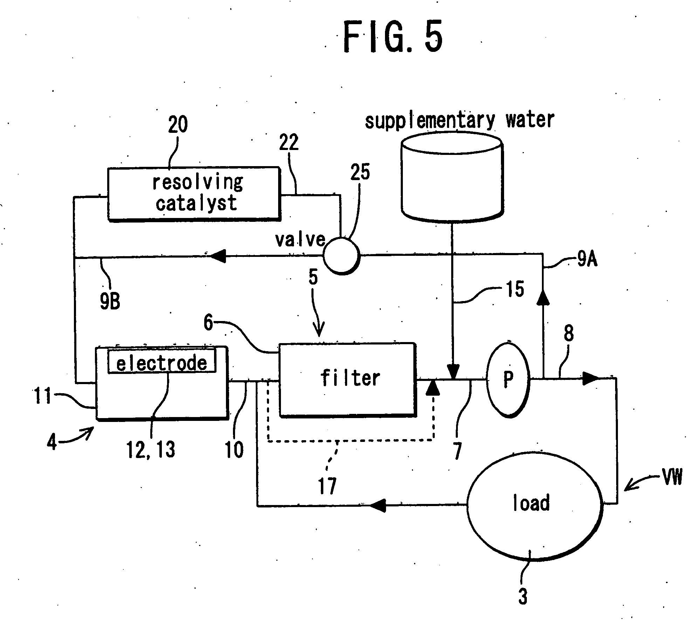

It is to be noted that in FIG. 3, the valve device 24 is disposed along the pipe 22 on the upstream side (the inlet side) of the resolving catalyst 20 to control opening/closing of the valve device 24, whereby inflow of the for-treatment water into the resolving catalyst 20 is controlled. However, as shown in FIG. 5, a three-way valve 25 may be installed at a branch point of a pipe 9A so that the three-way valve controls inflow of for-treatment water into a pipe 22.

In this case, the three-way valve 25 is usually controlled so that the pipe 9A is allowed to communicate with a pipe 9B to disturb inflow into the pipe 22 and so that the pipe 9A is allowed to communicate with the pipe 22 for an only predetermined time immediately before energization of electrodes 12, 13 of electrolytic treatment means 4 is started, to allow the for-treatment water to flow into the pipe 22.

A specific operation will be described with reference to the timing chart of FIG. 4. It is to be noted that this case is the same as the above case where the valve device 24 is used except the operation of the three-way valve 25, and hence the only operation of the three-way valve 25 will briefly be described. First, when power of an air bacteria removal device VW is turned on, the energization of the electrodes 12, 13 of the electrolytic treatment means 4 is started (electrolysis ON shown in FIG. 4), and a circulation pump P is simultaneously started (pump ON state shown in FIG. 4). At this time, the three-way valve 25 allows the pipe 9A to communicate with the pipe 9B, and inflow of for-treatment water into the pipe 22 is disturbed (a state to close the valve as shown in FIG. 4). In consequence, the for-treatment water which has flowed from the circulation pump P to be split and has flowed into the pipe 9A does not flow through a resolving catalyst 20, and flows into an electrolytic cell 11 via the pipe 9B.

Subsequently, with elapse of a predetermined time after the energization of the electrodes 12, 13 is started, the energization is stopped (electrolysis OFF shown in FIG. 4). At this time, the circulation pump P is continued to be operated (pump ON shown in FIG. 4), and the three-way valve 25 similarly allows the pipe 9A to communicate with the pipe 9B (a state to close the valve as shown in FIG. 4).

Subsequently, it is assumed that the electrolysis at the electrodes 12, 13 is performed on predetermined conditions, for example, for ten minutes at predetermined intervals of, for example, 30 minutes so that a concentration of hypochlorous acid of the for-treatment water (the electrolytic water) to be supplied into the electrolytic cell 11 or an element 3 maintains a predetermined value (e.g., 2 PPM to 10 PPM). In this case, with elapse of a predetermined time immediately before the energization of the electrodes 12, 13 is started, for example, with elapse of 25 minutes after the energization is stopped, the three-way valve 25 is controlled so as to allow the pipe 9A to communicate with the pipe 22 for five minutes until the energization of the electrodes 12, 13 is started (valve open state shown in FIG. 4). In consequence, the for-treatment water which has flowed out of the circulation pump P to be split and has flowed into the pipe 9A enters the pipe 22 and passes through the resolving catalyst 20. At this time, hypochlorous acid in the for-treatment water is resolved while passing through the resolving catalyst 20.

In this manner, all hypochlorous acid produced by the previous electrolysis can be resolved to initialize the concentration of hypochlorous acid before the next energization of the electrodes 12, 13 of the electrolytic treatment means 4 is started.

### (Embodiment 3)

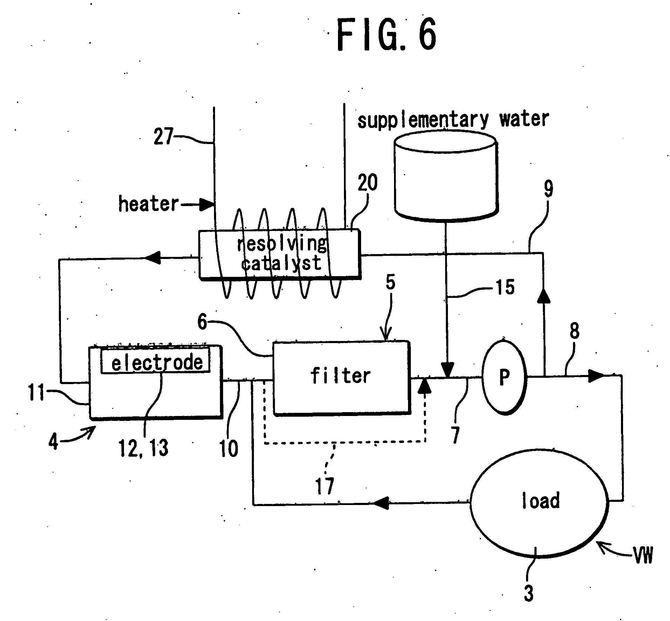

It is to be noted that in a case where a thermal catalyst such as nickel oxide is used as a resolving catalyst 20, that is, a catalyst is used which does not resolve hypochlorous acid in for-treatment water at ordinary temperature and which is heated to a predetermined temperature to perform a catalyst function and resolve hypochlorous acid in the for-treatment water, unlike Embodiment 2, the pipe 22 and the three-way valve 25 are not disposed. As shown in FIG. 6, the resolving catalyst 20 can be interposed along a pipe 9. In this case, heating means (e.g., a heater 27) capable of heating the resolving catalyst 20 to the predetermined temperature is attached to the resolving catalyst 20. It is to be noted that in a case where nickel oxide is used as the resolving catalyst 20, since the catalyst is heated at 40°C to 70°C to perform a resolving function, energization of the heater 27 needs to be controlled so that nickel oxide is heated at a temperature of 40°C to 70°C.

The energization of the heater 27 is executed while energization of electrodes 12, 13 is stopped (when electrolysis is not performed), that is, for a predetermined time before the energization of the electrodes 12, 13 is started.

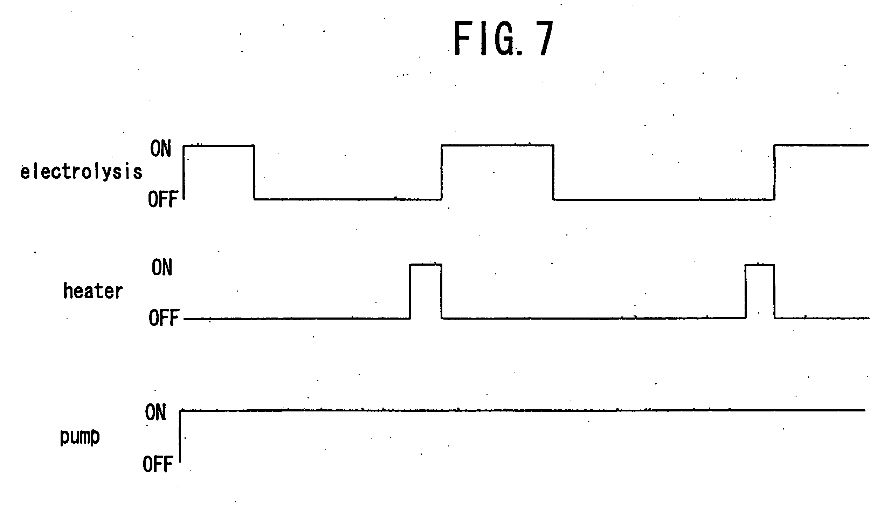

Here, an operation will be described with reference to a timing chart shown in FIG. 7. First, when power of an air bacteria removal device VW is turned on, the energization of the electrodes 12, 13 of electrolytic treatment means 4 is started (electrolysis ON shown in FIG. 7). A circulation pump P is simultaneously started (a state of pump ON shown in FIG. 7). At this time, since the heater 27 is stopped (heater OFF shown in FIG. 7), hypochlorous acid in for-treatment water which has exited from the circulation pump P to enter the pipe 9 and passes through the resolving catalyst 20 flows into an electrolytic cell 11 without being resolved by the resolving catalyst 20.

Subsequently, in the electrolytic cell 11, the for-treatment water is electrolyzed to produce electrolytic water (the for-treatment water) including hypochlorous acid (an electrochemical treatment). When the circulation pump P is operated, the for-treatment water produced in the electrolytic cell 11 enters a pipe 10 from one end of the pipe which opens in the for-treatment water of the electrolytic cell 11, and enters a space 2A of a water reception tray 2 on an upstream side (an inlet side) of a filter 6. The for-treatment water in the space 2A flows into a space 2B via the filter 6, enters a pipe 7 from one end of the pipe which opens in the space 2B, passes through the circulation pump P, and is then split into two flows, and one of the flows is supplied to an element 3 via a pipe 8.

On the other hand, simultaneously with the start of the energization of the electrodes 12, 13, a fan (not shown) disposed on the side of one surface of the element 3 is started, whereby the air in a bacteria removal space accelerated with the fan and sucked is supplied to the element 3. Then, bacteria is removed from the air in the bacteria removal space as described above in the embodiment in more detail.

In addition, the for-treatment water is condensed at the element 3 to return into the space 2A of the water reception tray 2 on the upstream side (the inlet side) of the filter 6. In consequence, the for-treatment water combines with for-treatment water treated by electrolytic treatment means 4 and allowed to flow into the space 2A via the pipe 10. At this time, the for-treatment water from the element 3 is condensed at the element 3 to bring the water into a state in which a scale is easily generated, and the water enters the space 2A of the water reception tray 2. Similarly, the scale generated from the for-treatment water by the electrolysis at the electrolytic treatment means 4 is deposited on the electrodes, but a part of the scale flows out of the electrolytic cell 11 without being deposited on the electrodes, and enters the space 2A of the water reception tray 2.

Therefore, the for-treatment water combined in this space 2A has the state in which the scale is easily generated, or a state in which the scale has been generated. Then, the for-treatment water is passed through the filter 6, whereby the scale in the for-treatment water can be collected by the filter 6.

Subsequently, the for-treatment water from which the scale has been removed by the filter 6 then flows out of the water reception tray 2 via the space 2B and is split into two flows. After one of the flows is supplied to the element 3 as described above, the flow returns to the space 2A of the water reception tray 2 on the upstream side (the inlet side) of the filter 6 as described above. This cycle is repeated. The other split flow of the for-treatment water returns to the inlet side of the electrolytic treatment means 4 via the pipe 9 and the resolving catalyst 20 as described above.

On the other hand, with elapse of a predetermined time after the energization of the electrodes 12, 13 is started, the energization is stopped (electrolysis OFF shown in FIG. 7). At this time, the circulation pump P is continued to be operated (pump ON), and the heater 27 is stopped (a state of heater OFF shown in FIG. 7).

Moreover, it is assumed that the electrolysis at the electrodes 12, 13 is performed on predetermined conditions, for example, for ten minutes at predetermined intervals of, for example, 30 minutes so that a concentration of hypochlorous acid of the for-treatment water (the electrolytic water) to be supplied into the electrolytic cell 11 or the element 3 maintains a predetermined value (e.g., 2 PPM to 10 PPM). In this case, with elapse of a predetermined time immediately before the energization of the electrodes 12, 13 is started, for example, with elapse of 25 minutes after the energization is stopped, the heater 27 is energized (a state of heater ON shown in FIG. 7) to heat the resolving catalyst 20 at a predetermined temperature for five minutes until the energization of the electrodes 12, 13 is started. In consequence, hypochlorous acid of the for-treatment water which has flowed out of the circulation pump P to be split and has flowed into the pipe 9 to pass through the resolving catalyst 20 is resolved by the resolving catalyst 20.

In consequence, in a state in which the electrolysis is not performed, the resolving catalyst 20 can be operated to initialize the concentration of hypochlorous acid in the for-treatment water in the same manner as in Embodiment 2, whereby hypochlorous acid can be resolved without influencing removal of bacteria from air to avoid a disadvantage that the concentration of hypochlorous acid in the for-treatment water excessively increases.

### (Embodiment 4)

It is to be noted that in the above embodiments, a scale removal system of the present invention is applied to a air bacteria removal device VW, and an element of the air bacteria removal device VW is a load of the present invention. However, the scale removal system of the present invention is not limited to the air bacteria removal device VW, and may effectively be used in another device. For example, the system can be applied to, for example, a cooling tower which cools an object to be cooled with cooling water or a humidifier. In a case where the scale removal system is applied to the cooling tower, a load corresponds to a condenser of the cooling tower. When the system is applied to the humidifier, the load corresponds to a humidifying element.

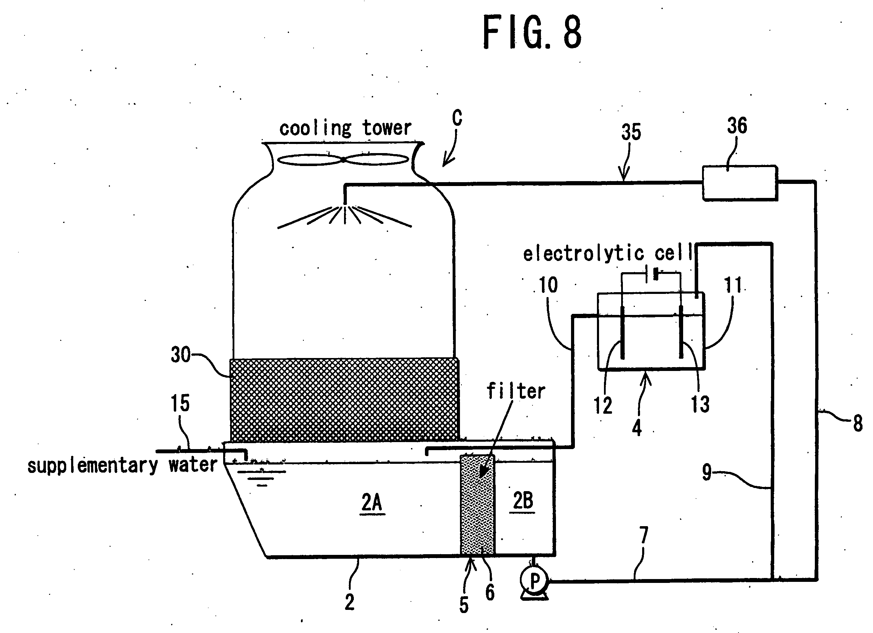

Next, one example of a case where the scale removal system of the present invention is applied to a cooling tower C will be described. In the cooling tower C, during non-use, a scale is easily generated from stored water (for-treatment water) circulated through the cooling tower. During use, the water (the for-treatment water) circulated through a circuit aggregates. Especially, water is condensed at a capacitor 30 (corresponding to a load of the present invention), thereby resulting in a situation in which a scale is easily generated from the water. Since the generated scale is easily deposited on surfaces (heat conduction surfaces) of pipes and the capacitor 30, it is preferable to use the scale removal system of the present invention in order to remove adverse influence of such generation of the scale. It is to be noted that in FIG. 8, components denoted with the same reference numerals as those of FIGS. 1 to 7 produce similar effects and perform similar functions, and hence description thereof is omitted here.

In FIG. 8, reference numeral 35 is a circuit through which cooling water (for-treatment water) flows. This circuit 35 is constituted by connecting electrolytic treatment means 4, load means 36, the cooling tower C, a water reception tray 2, scale collection means 5 disposed in the water reception tray 2, a circulation pump P and the like via pipes. That is, a water supply source such as city water is connected to one end of a water supply pipe 15, the other end of the water supply pipe 15 opens in a space 2A of the water reception tray 2, and the circuit 35 is replenished with water (supplementary water) from this pipe.

The water reception tray 2 is provided with the scale collection means 5 including a filter 6 which has such a water passing property that water can be distributed and which is capable of trapping an only scale included in the water in the same manner as in the above embodiments, and the inside of the water reception tray 2 is separated into a space 2A side and a space 2B side. Furthermore, in the same manner as in the above embodiments, a water surface of water stored in the water reception tray 2 is usually set so as to be positioned below a height dimension of the filter 6.

An opening of the other end of the water supply pipe 15 is positioned in the space 2A of the water reception tray 2 so that the supplementary water from the water supply pipe 15 can be supplied. Moreover, an opening of the other end of a pipe 10 connected to an electrolytic cell 11 of the electrolytic treatment means 4 is positioned so that the for-treatment water electrolytically treated by the electrolytic treatment means 4 can be supplied via the pipe 10. A pipe 7 is connected to the space 2B, and one end of the pipe 7 opens at a bottom portion in the space 2B. One end of the pipe 7 is positioned at the bottom portion in the space 2B, the pipe passes through the circulation pump P, and the other end of the pipe is branched into two pipes. Furthermore, one branched pipe 8 reaches the cooling tower C via the load means 36, and opens on the upside of the capacitor 30 of the cooling tower C so that the water (the for-treatment water) can be supplied to the surface of the capacitor 30. The other branched pipe 9 is connected to the electrolytic cell 11 of the electrolytic treatment means 4 so that the water can be supplied into the electrolytic cell 11. Since a constitution of the electrolytic treatment means 4 is similar to that of the above embodiment, description thereof is omitted here.

The load means 36 applies a load to the for-treatment water to reduce a pressure of the water, and the for-treatment water is evaporated on the surface of the capacitor 30 in the cooling tower C disposed on a downstream side. The capacitor 30 in the cooling tower C is connected to a compressor, expansion means and an evaporator (not shown) via pipes to constitute, for example, a refrigerant cycle of an air conditioner.

An operation of the scale removal system of the present embodiment constituted as described above will be described. The circulation pump P is driven to simultaneously start energization of electrodes 12, 13 of the electrolytic treatment means 4. In consequence, the for-treatment water in the electrolytic cell 11 is electrolyzed to produce electrolytic water (the for-treatment water) including hypochlorous acid (an electrochemical treatment).

Subsequently, when the circulation pump P is operated, the for-treatment water (the electrolytic water) produced in the electrolytic cell 11 enters the pipe 10 from one end of the pipe which opens in the for-treatment water of the electrolytic cell 11, and enters the space 2A of the water reception tray 2 on the upstream side (the inlet side) of the filter 6. The for-treatment water in the space 2A flows into the space 2B through the filter 6, enters the pipe 7 from one end of the pipe which opens in this space 2B, passes through the circulation pump P, and is then split into two flows. One flow flows into the pipe 8, a pressure of the flow is reduced by the load means 36 disposed along the pipe 8, and then discharged into the cooling tower C. A part of the water discharged into the cooling tower C absorbs heat from the capacitor 30 disposed in the cooling tower C to evaporate. On the other hand, a refrigerant flowing through the capacitor 30 performs heat exchange between the refrigerant and the for-treatment water to be cooled. Then, a part of the water (water vapor) evaporated in the cooling tower C returns to a liquid, and drips down into the space 2A of the water reception tray 2 together with water which has not evaporated in the cooling tower C. In consequence, the water is treated by the electrolytic treatment means 4, and combines with the for-treatment water which has flowed into the space 2A via the pipe 10.

At this time, the for-treatment water from the cooling tower C is evaporated in the cooling tower C to be condensed, brought into a state in which a scale is easily generated, and returns into the space 2A of the waster reception tray 2. Similarly, the scale generated from the for-treatment water by the electrolysis by the electrolytic treatment means 4is deposited on the cathode-side electrode 13, but a part of the scale is not deposited on the electrode 13, flows out of the electrolytic cell 11, and enters the space 2A of the water reception tray 2.

Therefore, the for-treatment water combined in this space 2A has the state in which the scale is easily generated, or a state in which the scale has been generated. Then, the for-treatment water is passed through the filter 6, whereby the scale in the for-treatment water can be collected by the filter 6.

Subsequently, the for-treatment water from which the scale has been removed by the filter 6 then flows out of the water reception tray 2 via the space 2B and is split into two flows. After one of the flows is supplied to the cooling tower C as described above, the flow returns to the space 2A of the water reception tray 2 on the upstream side (the inlet side) of the filter 6 as described above. This cycle is repeated. The other split flow of the for-treatment water returns to the inlet side of the electrolytic treatment means 4.

In this manner, the for-treatment water to be circulated through the electrolytic treatment means 4 and the for-treatment water to be circulated through the cooling tower C are combined and passed through the filter 6, whereby the scale generated by the electrolytic treatment means 4 can be collected by the filter 6 before the scale is circulated through the cooling tower C. In consequence, it is possible to eliminate, as much as possible, a disadvantage that the scale is deposited on the heat conduction surface which is the surface of the capacitor 30 of the cooling tower C to remarkably deteriorate a cooling capability.

Furthermore, according to the present invention, even the scale generated by evaporating and condensing the for-treatment water in the cooling tower C is not directly passed through the electrolytic treatment means 4, and can be collected by the filter 6, so that the scale is not easily generated in the electrode 13. In consequence, since the reverse of the polarity as the factor for the deterioration of the electrodes 12, 13 can be reduced as much as possible, durability of the electrodes 12, 13 improves, and the life can be lengthened.

It is to be noted that with elapse of a predetermined time after the energization of the electrodes 12, 13 is started, the energization is stopped. Then, the electrolysis at the electrodes 12, 13 of the electrolytic treatment means 4 is performed on predetermined conditions, for example, for ten minutes at intervals of 30 minutes so that a concentration of hypochlorous acid of the for-treatment water to be supplied to the electrolytic cell 11 or the surface of the capacitor 30 maintains a range of 2 PPM to 10 PPM. Since the for-treatment water scale is deposited on the cathode-side electrode 13 by such electrochemical treatment, the polarity is reversed at a constant period. That is, when the electrolyses are performed as much as predetermined times (e.g., ten times), the polarities of the electrodes 12, 13 are reversed. In consequence, the scale deposited on the cathode-side electrode 13 is peeled. The scale peeled from the electrode 13 flows into the space 2A of the water reception tray 2 together with the for-treatment water, and is collected while the scale passes through the filter 6. In this manner, even the scale peeled from the electrode 13 by reversing the polarity can be collected by the filter 6.

It is to be noted that if a large amount of scale is deposited on the filter 6 and the water cannot be circulated through the filter 6, the for-treatment water that has flowed into the space 2A from the electrolytic treatment means 4 and the surface of the capacitor 30 does not flow through the space 2B of the water reception tray 2, and is stored in the space 2A. Subsequently, when the for-treatment water stored in the space 2A is accumulated beyond a height dimension of the filter 6, the water in the space 2A flows through an upper portion of the filter 6, that is, overflows to flow into the space 2B in the same manner as in the above embodiments. When the water cannot be circulated via the filter 6 in this manner, a channel (not shown in the present embodiment) is constituted so that the water in the space 2A bypasses the space 2B from the upside of the filter 6. Therefore, even if the filter 6 is clogged, the circulation of the for-treatment water can be secured until such scale with which the filter 6 is clogged is removed.

As described above in detail, even in a case where the scale removal system of the present invention is applied to the cooling tower C, the disadvantage that the scale is deposited on the surface of the capacitor 30 of the cooling tower C is avoided, the scale is not easily generated in the electrode 13, and the disadvantage that the scale is deposited on both of the electrode 13 and the capacitor 30 can effectively be avoided. Furthermore, even if the filter 6 is clogged with the scale, the for-treatment water overflows the filter 6. Therefore, the circulation of the for-treatment water can be secured.

### (Embodiment 5)

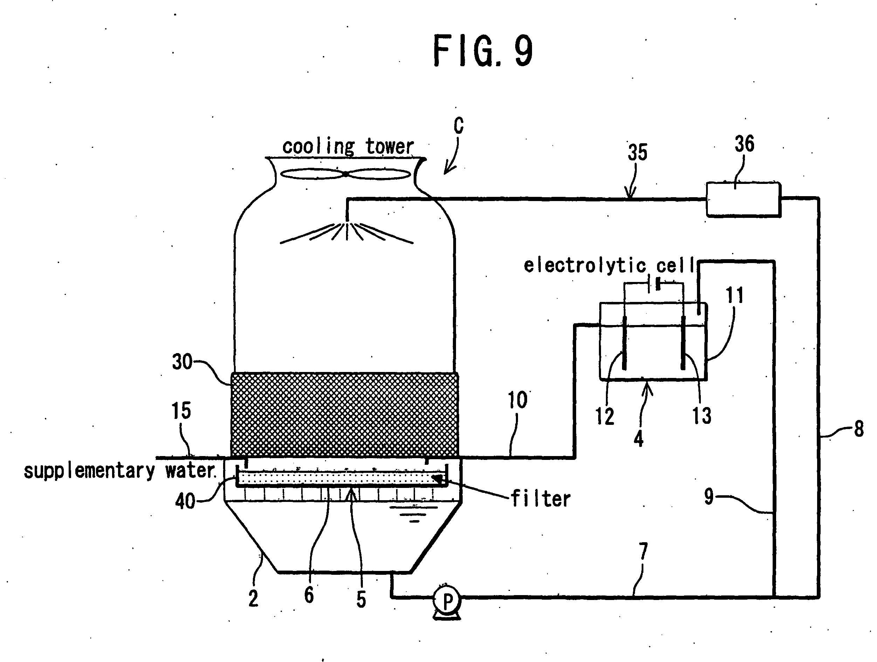

Moreover, in Embodiment 4 described above, a filter 6 as scale collection means 5 is disposed in a water reception tray 2 to separate the water reception tray 2 into a space 2A side and a space 2B side, but the present invention is not limited to this constitution as long as for-treatment water supplied to a load (a capacitor 30 of a cooling tower C in Embodiment 4) is combined with for-treatment water from the scale collection means 5, and can be returned to an inlet side of the scale collection means 5. For example, as shown in FIG. 9, a container 40 whose bottom surface includes the filter 6 of the scale collection means 5 is arranged in the water reception tray 2 so as to combine the for-treatment water passed through the cooling tower C and the for-treatment water from the electrolytic treatment means 4 in the container 40. Even in this constitution, a similar effect can be obtained.

In this case, usually (i.e., when the filter 6 is not clogged with the scale), all the for-treatment water (the for-treatment water from the cooling tower C and the for-treatment water from electrolytic treatment means 4) combined in the container 40 is passed through the filter 6 of the scale collection means 5, and allowed to drip down to the water reception tray 2. Then, the for-treatment water in the water reception tray 2 is removed from a pipe 7 connected to a bottom portion of the water reception tray 2, and split into flows. One flow is supplied to the cooling tower C via load means 36. The other split flow of for-treatment water is supplied to the electrolytic treatment means 4.

It is to be noted that it is assumed that as the container 40, a container having such a sufficient diameter as to receive all the for-treatment water from the cooling tower C and having a diameter smaller than that of the water reception tray 2 is used. In consequence, when the filter 6 constituting the bottom portion of the container 40 is clogged with the scale, the for-treatment water cannot be circulated via the filter 6 and the for-treatment water overflows the container 40, the for-treatment water which has overflowed the container 40 constitutes a channel so that the water bypasses the filter 6 to flow through the water reception tray 2. Therefore, in the same manner as in the above embodiments, even if the filter 6 is clogged, the circulation of the for-treatment water can be secured until such scale with which the filter 6 is clogged is removed.

## Claims

1. A scale removal system configured to remove a scale from for-treatment water which is supplied to a load in a circulating manner, the system comprising:
at least a pair of electrodes (12,13) which are submerged into the for-treatment water to electrochemically treat the for-treatment water; and
scale collection means (5) disposed on a downstream side of the electrodes,
wherein the for-treatment water passed through the scale collection means (5) is split into flows, one flow (8) is supplied to the load, then combined with the for-treatment water from the electrodes (12,13) and returned to an inlet side of the scale collection means, and the other flow (9) is returned to an inlet side of the electrodes.

2. The scale removal system according to claim 1, which further comprises:
a channel (17) through which the for-treatment water bypasses the scale collection means (5).

3. The scale removal system according to claim 1 or 2, which further comprises:
hypochlorous acid resolving means (20) for resolving hypochlorous acid in the for-treatment water.

## Patentansprüche

1. Ablagerungsentfernungssystem, das zum Entfernen einer Ablagerung aus zu behandelndem Wasser, das einer Last in einer zirkulierenden Weise zugeführt wird, aufgebaut ist, wobei das System umfasst:
mindestens ein Paar Elektroden (12, 13), die in das zu behandelnde Wasser eingetaucht sind, um das zu behandelnde Wasser elektrochemisch zu behandeln; und
Ablagerungssammelmittel (5), das auf einer den Elektroden nachgelagerten Seite angeordnet ist;
wobei das zu behandelnde Wasser, das durch das Ablagerungssammelmittel (5) hindurchgelaufen ist, in Ströme aufgeteilt wird, wobei ein Strom (8) der Last zugeführt wird, dann mit dem zu behandelnden Wasser von den Elektroden (12, 13) vereinigt und zu einer Einlassseite des Ablagerungssammelmittels zurückgeführt wird und der andere Strom (9) zu einer Einlassseite der Elektroden zurückgeführt wird.

2. Ablagerungsentfernungssystem gemäß Anspruch 1, das weiter umfasst:
einen Kanal (17), durch den das zu behandelnde Wasser das Ablagerungssammelmittel (5) umgeht.

3. Ablagerungsentfernungssystem gemäß Anspruch 1 oder 2, das weiter umfasst:
ein Hypochlorige-Säure-Auflösemittel (20) zum Auflösen hypochloriger Säure in dem zu behandelnden Wasser.

## Revendications

1. Système d'élimination du tartre configuré pour éliminer un tartre provenant de l'eau de traitement qui est fournie à une charge d'une manière circulante, le système comprenant :
au moins une paire d'électrodes (12, 19) qui sont immergées dans l'eau de traitement afin de traiter électrochimiquement l'eau de traitement ; et
des moyens de collecte de tartre (5) disposés sur un côté aval des électrodes,
dans lequel l'eau de traitement passée à travers les moyens de collecte de tartre (5) est séparée en flux, un flux (8) étant fourni à la charge, puis combiné à l'eau de traitement à partir des électrodes (12, 13) et renvoyé vers un côté d'entrée des moyens de collecte de tartre et l'autre flux (9) étant renvoyé vers un côté d'entrée des électrodes.

2. Système d'élimination du tartre selon la revendication 1, qui comprend en outre :
un canal (17) à travers lequel l'eau de traitement contourne les moyens de collecte de tartre (5).

3. Système d'élimination du tartre selon la revendication 1 ou 2, qui comprend en outre :
des moyens de dissolution d'acide hypochloreux (20) pour dissoudre l'acide hypochloreux dans l'eau de traitement.
